# EUROPÄISCHE PATENTSCHRIFT

(11) **EP 1 333 049 B1**
(45) Veröffentlichungstag und Bekanntmachung des Hinweises auf die Patenterteilung: **15.03.2006**
(21) Anmeldenummer: 03001685.1
(22) Anmeldetag: 25.01.2003
(51) Int. Cl.: C08G 69/18, C08G 69/48, C08G 69/04

(54) **Verfahren zur Herstellung von stabilisiertem Polyamid 6**
Process for the preparation of stabilized polyamide 6
Procédé de préparation de polyamide 6 stabilisé

(30) Priorität: 05.02.2002 DE 10210377
(43) Veröffentlichungstag der Anmeldung: 06.08.2003
(73) Patentinhaber: Zimmer AG, 60388 Frankfurt am Main (DE)
(72) Erfinder: Seidler, Hans-Peter, Dr., 61381 Friedrichsdorf (DE); Wolff, Konrad, 60388 Frankfurt am Main (DE); Reimer, Dirk, Dr., 60316 Frankfurt am Main (DE)
(74) Vertreter: Meyer-Dulheuer, Karl-Hermann

(56) Entgegenhaltungen:
- EP-A- 0 409 093
- ANONYMOUS: "Polyamide with reduced amino end groups and process for said polyamide" RESEARCH DISCLOSURE, KENNETH MASON PUBLICATIONS, HAMPSHIRE, GB, Bd. 358, Nr. 8, Februar 1994 (1994-02), XP007119579 ISSN: 0374-4353

## Beschreibung

Die Erfindung betrifft ein Verfahren zur Herstellung von stabilisiertem Polyamid 6, das durch eine verringerte Caprolactamrückbildung ausgezeichnet ist.

Es ist bekannt, dass das durch Polymerisation von ε-Aminocaprolactam entstandene Polyamid-6 gleichgewichtsbedingt etwa 11 Gewichtsprozent Oligomere und monomeres ε-Aminocaprolactam enthält, wobei letzteres bei weitem überwiegt. Dieser hohe Gehalt an niedermolekularen Substanzen muss sowohl aus technischen als auch aus wirtschaftlichen und ökologischen Gründen, zum Beispiel durch Granulatextraktion oder durch Vakuumbehandlung in der Schmelze, vor der Weiterverarbeitung deutlich reduziert werden. Bisher hat der Gehalt an niedermolekularen Substanzen im Polyamid-6 vor allem unter wirtschaftlichen und technischen Gesichtspunkten gestört. Neuerdings gerät das Caprolactam aus umwelt- und gesundheitspolitischen Gründen in die Kritik und es wird nur noch eine maximale Arbeitsplatzkonzentration (MAK) von höchstens 5 mg/m³ als zulässig angesehen. Deshalb wird gezielt nach Möglichkeiten zur Verminderung seiner Rückbildung gesucht.

Wegen der relativ guten Wasserlösüchkeit der oligomeren und monomeren Bestandteile im Polyamid-6 erfolgt deren analytischer Nachweis häufig über einen vorgeschalteten Extraktionsschritt mit heißem Wasser. Dementsprechend wird auch der Masseanteil an niedermolekulare Substanzen häufig Extraktgehalt genannt.

Während der nachfolgenden thermoplastischen Verarbeitung erhöht sich der Extraktgehalt von Polyamid-6 zwar wieder, da das Polymere den Gleichgewichtszustand anstrebt. Allerdings wird wegen der vergleichsweise kurzen Verweilzeit im schmelzflüssigen Zustand während der üblichen thermoplastischen Verarbeitung, zum Beispiel beim Faserspinnen, Spritzguss oder der Extrusion, der Gleichgewichtszustand auch nicht mehr annähernd erreicht. Viel mehr bilden sich, je nach Temperatur und Verweilzeit, nur etwa 0,5 bis 2,0 Gewichtsprozent Caprolactam und Oligomere zurück. Diese Konzentration ändert sich auch am fertigen Produkt nicht mehr, da die Caprolactamrückbildungsgeschwindigkeit bei den üblichen Einsatztemperaturen und im festen Zustand vernachlässigbar ist. Jedoch führt auch dieser relativ kleine, bislang als unvermeidlich angesehen Extraktgehalt häufig zu Störungen in der Weiterverarbeitung, insbesondere zu Verschmutzungen von Spinndüsen, Galettenoberflächen und Kühlwalzen.

Aus diesen Gründen, aber auch wegen des zunehmenden Umweltbewusstseins und strengeren gesetzlichen Emissions- und Immissionsauflagen wird auch der umwelthygienische und arbeitsmedizinische Aspekt der Caprolactamrückbildung immer bedeutsamer und eine weitere Reduktion der Caprolactamkonzentration in der Schmelze erforderlich.

Erfindungsgemäß wird dieses Problem durch ein Verfahren gelöst, das auf der Annahme beruht, dass der Abbau des Polyamids von den endständigen Aminogruppen ausgeht. Werden diese endständigen Aminogruppen blockiert, sollte dadurch auch eine Rückbildung des monomeren Caprolactams aus dem Polyamid-6 verhindert werden können.

Die als Endcapping bezeichnete Blockade der endständigen Aminogruppen von Polyamiden ist nicht mehr neu. Vielmehr wurden auch schon bisher vor der Weiterverarbeitung in textilen Anwendungen endständige Aminogruppen durch chemische Reaktionen mit geeigneten Reagenzien blockiert. So ist es aus der europäischen Patentschrift 0 409 093 bekannt, dass die Anschmutzbarkeit von Polyamidfasem vermindert werden kann, indem die Zahl der endständigen Aminogruppen des Polyamids durch eine Umsetzung mit einem Lacton vermindert wird. Aus der US-Patentschrift 5 562 871 und aus der Research Disclosure, Kenneth Mason Publications, Hampshire, GB, Bd. 358, Nr. 8 Februar 1994 ist bekannt, dass man die Anfärbbarkeit von Polyamiden mit Säurefarbstoffen reduzieren kann, wenn die Anzahl der Aminoendgruppen vermindert wird. Ferner ist aus der europäischen Patentanmeldung 0 285 692 bekannt, dass die Verträglichkeit von Polyamid-Polyester-Blends verbessert werden kann, wenn die Aminoendgruppen blockiert werden. Keiner dieser Vorveröffentlichungen ist jedoch ein Hinweis darauf zu entnehmen, dass die Blockierung der Aminoendgruppen von Polyamiden irgendeinen Einfluss auf die Stabilisierung gegen die Monomerrückbildung haben könnte.

Auf andere Weise wird das Problem der Rückbildung von monomeren und oligomeren Bestandteilen in Polyamid-6 in der internationalen Patentanmeldung WO 00/47651 behandelt. Dort wird ein Verfahren zur Herstellung von Polyamiden durch Reaktion von Aminoitrilen mit Wasser beschrieben. Im Vergleich zum konventionell auf Basis von Caprolactam hergestellem Polyamid-6 wird dabei eine geringere Extraktzunahme während des Aufschmelzens beobachtet. Eine Stabilisierung des Polyamdis durch chemische Umsetzung der endständigen Aminogruppen ist dort allerdings nicht vorgesehen.

In der US-Patentschrift 6 268 468 wird ein Verfahren zur Verminderung sowohl der Aminoendgruppen als auch der Carboxylendgruppen von Polyamiden zur Verminderung der Rückbildung von Monomeren während der Extrusion des Polyamids beschrieben. Dabei wird das Polyamid im festen Zustand mit einer gasförmigen Säure, einem gasförmigen Säureanhydrid oder einem gasförmigen Amin behandelt. Durch diese Behandlung werden jedoch nur die an der Oberfläche des Granulatkorns frei zugänglichen Amino- oder Carboxylgruppen umgesetzt, während die im Inneren des Granulatkorns eingeschlossenen funktionellen Gruppen unverändert bleiben. Das hat zur Folge, dass keine einheitlichen Polyamide entstehen. Es liegen vielmehr Gemische vor, in denen die Amino- und Carboxylgruppen der Polyamide in unterschiedlichem Ausmaß umgesetzt sind. Die im Inneren des Granulatkorns enthaltenen Polyamide werden von dem Endcapping überhaupt nicht erfasst und erfahren deshalb durch die im US-Patent 6 268 468 beschriebene Behandlung auch keinen Zuwachs an Stabilität.

Es wurde nun ein Verfahren zur Verminderung der Caprolactam-Rückbildung von Polyamid-6 gefunden, bei dem man die Endgruppen eines getrockenten und endmonomerisierten Polyamids in schmelzflüssiger Phase blockiert. Dabei werden die Aminoendgruppen des Polyamids vorzugsweise durch Umsetzung mit einem Lacton oder einem Säureanhydrid blockiert. Kennzeichnend für das Verfahren ist insbesondere die Umsetzung in schmelzflüssiger Phase, wobei ein Zeitraum von 4 bis 15 min. besonders bevorzugt ist. Dabei wird die Polyamidschmelze auf eine Temperatur von 250 bis 300°C gehalten.

Besonders hervorragende Stabilisierungserfolge werden erzielt, wenn zur Blockierung der Aminoendgruppen des Polyamids ε-Caprolacton oder γ-Butyrolacton eingesetzt werden.

Durch die Behandlung des Polyamids in schmelzflüssiger Phase wird gewährleistet, dass die zum Endcapping der Aminoendgruppen verwendete Komponente ungehinderten Zugang zu allen vorhandenen Aminogruppen hat und sich nicht ein Teil der Polyamidmoleküle der Umsetzung dadurch entziehen kann, dass sie in einem für das Reagenz unzugänglichen Granulatkorn verborgen sind. Wichtig ist auch, dass das Endcapping-Reagenz vorzugsweise erst nach Abschluss der Polykondensation, besonders bevorzugt erst nach Abschluss einer Entmonomerisierung und Trocknung des Polyamids zugesetzt wird. Damit wird verhindert, dass das Reagenz bei der Stabilisierung monomerer und oligomerer Bestandteile verbraucht oder durch Hydrolyse aufgespalten und dann für das Endcapping nicht mehr zur Verfügung steht. Als ein besonders geeigneter Zugabeort und Zugabezeitpunkt erweist sich die Zugabe unmittelbar vor oder nach dem Einzug in den Aufschmelzextruder der Spinnanlage oder der Extrusion. Auch ein getrenntes Vermischen mit den Polyamid, zum Beispiel durch Auftrommeln oder Aufsprühen unmittelbar vor der Weiterverarbeitung in der Hubschnecke einer Spritzgussmaschine ist von Vorteil.

Nach dem erfindungsgemäßen Verfahren wird ein stabilisiertes Polyamid, insbesondere ein stabilisiertes Polyamid-6 erhalten, das einen Gesamtgehalt an Oligomeren und Monomoren unter 1 Gewichtsprozent, vorzugsweise unter 0,5 Gewichtsprozent aufweist.

Das erfindungsgemäße Verfahren ist auch deshalb überraschend, weil die Blockierung der Aminoendgruppen von Polyamiden durch das Endcapping eine kettenabbrechende, d.h. molekulargewichtsreduzierende Wirkung erwarten lässt (M.l. Kohan, Nylon Plastics Handbook, Seite 41 bis 43, Hanser Verlag, 1995). Diese unerwünschte Wirkung tritt jedoch bei dem erfindungsgemäßen Verfahren nicht ein. Überraschenderweise wird vielmehr die Caprolactamrückbildung durch ein Endcapping der Aminoendgruppen deutlich verlangsamt, ohne dass es zu einem unakzeptablen Molekulargewichtsabbau kommt. Offensichtlich kann durch das erfindungsgemäße Verfahren die Caprolactamrückbildung unterdrückt werden, bevor ein der veränderten Gleichgewichtslage entsprechender Molekulargewichtsabbau eintritt. Tatsächlich vermindert sich die relative Viskosität als Maß für den Molekulargewichtsabbau um weniger als 10 Gewichtsprozent.

Ort und Art der bevorzugten Zugabe des Endcapping-Reagenzes hängt auch vom Aggregatzustand, den Benetzungs- und Verteilungseigenschaften und der Reaktivität des Reagenzes ab. Hoch reaktive und flüssige Reagenzien können erst zu einem späteren Zeitpunkt dem Verfahren zugeführt werden, also zum Beispiel erst im Kompressions- oder Ausstoßteil der Extruderschnecke, nicht schmelzbare, als Feststoff vorliegende Reagenzien können in dem Polyamidgranulat durch einfache mechanische Vermischung verteilt werden.

Als Endcapping-Reagenzien kommen grundsätzlich alle ausreichend thermisch stabilen Reaktionspartner von primären Aminen in Betracht, die unter den üblichen Bedingungen der Weiterverarbeitung von Polyamiden in schmelzflüssiger Phase ausreichend reaktiv sind und keine störenden Nebenreaktionen eingehen. Neben dem bereits erwähnten ε-Caprolacton und dem γ-Butyrolacton können auch substituierte Caprolactone wie das 2-Methyl-ε-caprolacton, 6-Ethyl-ε-caprolacton, 3-Propyl-ε-caprolacton, 4n-Butyl-ε-caprolacton, 5-Isopentyl-ε-caprolacton, 2-Methyl-6-ethyl-ε-caprolacton, 6-Octyl-ε-caprolacton, 6-Cyclohexyl-ε-caprolacton, 6-Benzyl-ε-caprolacton, 2,4,6-Trimethyl-ε-caprolacton und 2,3,3',4,5,6-Hexamethyl-ε-caprolacton eingesetzt werden.

Unter den als Endcapping-Reagenzien vorteilhaft einsetzbaren Säureanhydriden sind neben dem bereits genannten Phthalsäureanhydrid, Maleinsäureanhydrid und Essigsäureanhydrid auch noch das Glutarsäureanhydrid, Benzophenoltetracarbonsäuredianhydrid, Naphthalintetracarbonsäuredianhydrid, Benzoltetracarbonsäuredianhydrid, Cyclobutantetracarbonsäuredianhydrd und Benzoesäureanhydrid hervorzuheben.

Auch Isocyanate wie das Phenylisocyanat können eingesetzt werden. Jedoch müssen in diesem Fall Vorkehrungen zur Abtrennung der gasförmigen Spaltprodukte, zum Beispiel der Einsatz von Entgasungsextrudem getroffen werden.

Die genannten Endcapping-Reagenzien werden in Mengen von 0,5 bis 3 Gewichtsprozent, vorzugsweise in Mengen zwischen 1,0 und 1,5 Gewichtsprozent, bezogen auf das Polyamid, eingesetzt.

Die Bestimmung der im Polyamid enthaltenen Oligomeren und Monomeren erfolgte durch Messung des Extraktgehaltes. Der wässrige Extrakt wurde dabei durch eine Soxhlet-Extraktion des Polymergranulates hergestellt. Danach wurde der Extraktgehalt refraktometrisch bestimmt.

Das erfindungsgemäße Verfahren wird durch die nachfolgenden in keiner Weise einschränkenden Beispiele näher erläutert:

### Beispiel 1

Das granulatförmige und getrocknete Polyamid 6 (handelsübliches PA-6 Ultramid BS 700 der BASF) wurde in einem Einschneckenextruder bei 280°C aufgeschmolzen, über eine Düse ausgepresst und unter Wasser stranggranuliert. Die Verweilzeit im schmelzflüssigen Zustand betrug etwa 8 Minuten.

In einer entsprechenden Versuchanordnung wurden mittels einer Zahnraddosierpumpe 4,7 g ε-Caprolacton pro kg Polyamid-6 in den Extrudereinzugsbereich dosiert. Die refraktrometrische Auswertung des wässrigen Extraktes der beiden hergestellten Polyamide ergab eine Abnahme des überwiegend aus Caprolactam bestehenden Extraktgehaltes von 1,42 Gewichtsprozent auf 0,92 Gewichtsprozent. Dabei verringerte sich die relative Viskosität (bestimmt bei 25°C in einer Konzentration von 10 mg/ml in 96%-iger Schwefelsäure mit einem Ubbelohde Kapillarviskosimeter nach DIN 51562) nur um 3,3% von 2,845 auf 2,752 wie es in der nachfolgenden Tabelle 1 gezeigt wird.

**Tabelle 1**

| | **Reagenz [Gew.-%]** | **Rel. Viskosität** | **Aminoendgruppen [mMol/kg]** | **Extraktgehalt [Gew.-%]** |
|---|---|---|---|---|
| PA 6 | 0 | 2,845 | 31 | 1,42 |
| PA 6 + Caprolacton | 0,47 | 2,752 | 13 | 0,92 |

### Beispiel 2

Das granulatförmige und getrocknete Polyamid-6 (handelsübliches PA 6 Ultramid BS 700 der BASF) wurde in einem Einschneckenextruder bei 280°C aufgeschmolzen, über eine Düse ausgepresst und unter Wasser stranggranuliert. Die Verweilzeit im schmelzflüssigen Zustand betrug etwa 8 min.

In einer entsprechenden Versuchsanordnung wurde mittels einer Zahnraddosierpumpe 6,2 g schmelzflüssiges o-Phthalsäureanhydrid (PSA) pro kg Polyamid-6 in den Einzugsbereich der Extruderschnecke dosiert. Die refraktrometrische Auswertung des wässrigen Extraktes ergab eine Abnahme des bekanntlich überwiegend aus Caprolactam bestehenden Extraktgehaltes von 1,42 auf 0,9 Gewichtsprozent. Dabei verringerte sich die relative Viskosität (bestimmt bei 25°C bei einer Konzentration von 10 mg/ml in 96%-iger Schwefelsäure in einem Ubbelode Kapillarviskosimeter nach DIN 51562) nur um 4% von 2,845 auf 2,731, wie es in der nachfolgenden Tabelle 2 gezeigt wird.

**Tabelle 2**

| | **Reagenz [Gew.-%]** | **Rel. Viskosität** | **Aminoendgruppen [mMol/kg]** | **Extraktgehalt [Gew.-%]** |
|---|---|---|---|---|
| PA 6 | 0 | 2,845 | 31 | 1,42 |
| PA 6 + PSA | 0,62 | 2,731 | 12 | 0,90 |

## Patentansprüche

1. Verfahren zur Verminderung der Caprolactam-Rückbildung von Polyamid-6, **dadurch gekennzeichnet, dass** man die Aminoendgruppen von getrocknetem und entmonomerisiertem Polyamid-6 in schmelzflüssiger Phase blockiert.

2. Verfahren nach Anspruch 1, **dadurch gekennzeichnet, dass** die Aminoendgruppen des Polyamid-6 durch Umsetzung mit einem Lacton oder einem Säureanhydrid blockiert werden.

3. Verfahren nach den Ansprüchen 1 und 2, **dadurch gekennzeichnet, dass** die Umsetzung in schmelzflüssiger Phase in einem Zeitraum von 4 bis 15 min durchgeführt wird.

4. Verfahren nach den Ansprüchen 1 bis 3, **dadurch gekennzeichnet, dass** die Temperatur der Polyamidschmelze 250° bis 300°C beträgt

5. Verfahren nach den Ansprüchen 1 bis 4, **dadurch gekennzeichnet, dass** zur Blockierung der Aminoendgruppen des Polyamids ε-Caprolacton oder γ-Butyrolacton eingesetzt werden.

6. Verfahren nach den Ansprüchen 1 bis 4, **dadurch**, **dadurch gekennzeichnet, dass** zur Blockierung der Aminoendgruppen des Polyamids Phthalsäureanhydrid, Maleinsäureanhydrid oder Essigsäureanhydrid eingesetzt werden.

## Revendications

1. Procédé pour diminuer la transformation régressive de polyamide-6 en caprolactame, **caractérisé en ce que** l'on bloque les groupes terminaux amino de polyamide-6 en phase fondue, séché et démonomérisé.

2. Procédé selon la revendication 1, **caractérisé en ce que** les groupes terminaux amino du polyamide-6 sont bloqués par réaction avec une lactone ou un anhydride d'acide.

3. Procédé selon les revendications 1 et 2, **caractérisé en ce que** la réaction est effectuée en phase fondue dans un intervalle de temps de 4 à 15 minutes.

4. Procédé selon les revendications 1 à 3, **caractérisé en ce que** la température du polyamide fondu est de 250°C à 300°C.

5. Procédé selon les revendications 1 à 4, **caractérisé en ce qu'**en vue de bloquer les groupes terminaux amino du polyamide sont employées l'ε-caprolactone ou la γ-butyrolactone.

6. Procédé selon les revendications 1 à 4, **caractérisé en ce qu'**en vue de bloquer les groupes terminaux amino du polyamide sont employés l'anhydride phtalique, l'anhydride maléique ou l'anhydride acétique.

## Claims

1. A method for the avoidance of caprolactam back formation of polyamide-6, **characterized in that** the amino end groups of dried and de-monomerized polyamide-6 are blocked in the molten phase.

2. The method according to claim 1, **characterized in that** the amino end groups of polyamide-6 are blocked through reaction with a lactone or an acid anhydride.

3. The method according to claims 1 and 2, **characterized in that** the reaction in the molten phase is carried out in a time period of 4 to 15 minutes.

4. The method according to claims 1 through 3, **characterized in that** the temperature of the polyamide melt amounts to 250 °to 300 °C.

5. The method according to claims 1 through 4, **characterized in that** for blocking of the amino end groups of polyamide ε-caprolactam or γ-butyrolactone are employed.

6. The method according to claims 1 through 4, **characterized in that** for blocking of the amino end groups of polyamide, phthalic acidanhydride, maleic acid anhydride or acetic acid anhydride are employed.
